# EUROPEAN PATENT SPECIFICATION

(11) **EP 1 826 156 B1**
(45) Date of publication and mention of the grant of the patent: **14.04.2010**
(21) Application number: 07003002.8
(22) Date of filing: 13.02.2007
(51) Int. Cl.: B65G 29/00

(54) **Turntable**
Drehteller
Plateau tournant

(30) Priority: 17.02.2006 IT VI20060048
(43) Date of publication of application: 29.08.2007
(73) Proprietor: MAEMA S.r.l., 37069 Villafranca di Verona VR (IT)
(72) Inventor: Lovato, Claudio, 37123 Verona (IT)
(74) Representative: Pajola, Stefano

(56) References cited:
- FR-A1- 2 693 707
- JP-A- 60 099 535
- US-A- 1 699 538
- US-A- 3 713 549
- US-A- 5 950 503
- US-A- 6 148 568
- US-A1- 2003 101 894

## Description

### Technical Field

The present invention generally finds application in the field of machine tools and particularly relates to a turntable for loads rotation.

The turntable may be advantageously used in a process line to transfer a heavy item from the exit of a first work station to the entry of the next station within the same line.

### Background of the invention

As is known, typical turntable devices that are used in process lines for load handling generally have a support base on which materials or products of various natures are placed to be rotated by an assembly of mechanical components.

These mechanical components essentially consist of a substantially circular fixed part, commonly known as "fifth wheel", which has a circular peripheral channel containing a predetermined number of ball or roller bearings made of steel or another material of adequate strength.

A movable part concentrically lies on the stationary part and has an inner circular toothing. The movable part bears in turn a support platform whose size is determined as a function of the types of materials and products to be handled.

The rotation of the movable part is controlled by a motor having a shaft with a pinion that meshes with the toothing of the movable part, and transmits to the latter the shaft motion, thereby allowing it to rotate.

A solution of this type is known, for instance, from Japanese patent JP6329246, which discloses a rotary table comprising an upper platform mounted over a stationary base, and freely rotating relative to the latter.

A plurality of individually driven rollers is placed within an annular channel under the movable platform, to cause such platform to rotate.

These prior art solutions still suffer from apparent and recognized drawbacks, the worst of which is that they require foundations of such considerable size, that it is difficult, if not impossible, to move the device from one position to the other in the workshop.

As a result, installation of the platform during leveling and alignment with the pavement plane is a particularly difficult operation, especially as the size of the whole device increases, with particular reference to the size of the contact surface with the movable platform with the toothing.

Furthermore, this prior art structure requires the base and the drive members (motor, shaft pinion) to be received in a pit of significant depth with respect to the pavement level, which involves costly excavation works and makes access to the various parts of the base even more difficult, not only during installation but also and especially during ordinary and extraordinary maintenance.

If processing involves the use of considerable amounts of water, a further drawback arises from the need of preventing ingress of water into the pit.

Also, typical fifth wheels have a relatively small size as compared with the considerable size of the device, because of the high costs associated to their mechanical precision requirements.

This involves the use of crossbars having large cantilever portions which, under the load, are subjected to high bending stresses, affect the horizontal alignment of, the platform with the other stations of the process line.

JP 60 099535 discloses an example of a turntable according to the preamble of claim 1, the turntable having a platform amounted on a stationary base which could be positioned without realizing a pit into the pavement of the premises wherein the turntable is located.

The platform is moved by an electrical motor fixed on the stationary base and having a driving roller in contact engage with the platform, externally thereto. As a consequence, this turntable could not be used in presence of water.

### Summary of the invention

The object of this invention is to overcome the above drawback, by providing a turntable for loads rotation that is highly efficient and relatively cost-effective.

A particular object is to provide a turntable that allows to simplify motion transmission while reducing the number of components and, as a result, the overall size of the device.

A further object is to provide a turntable that does not require foundation works and is easily leveled curing installation, while avoiding the drawbacks derived from the use of water in operation.

Another object of the present invention is to provide a turntable that allows easy access to all the derive members.

Yet another object of this invention is to provide a turntable that can be sized according to its specific use, with relatively low costs, while limiting the use of cantilever crosspieces and reducing alignment problems.

These and other objects, as better explained below, are fulfilled by a turntable for loads rotations which, an defined in claim 1, comprises a stationary base to be anchored to the floor, a movable plate designed support a load and rotatably mounted on the stationary base to rotate about a substantially vertical axis, motor means for impacting a controlled rotary motion about the axis of rotation to the movable plate and drive means interposed between the motor means and the movable plate for imparting a rotation moment to this latter.

A peculiar feature of the invention is that the drive means include at least one pair of elements, one of which is attached to the movable plate.

Thanks to this particular configuration, the turntable of the invention allows to simplify motion transmission by reducing the number of components and, as a result, space requirements, and allowing implementation of different solutions in response to specific requirements.

Advantageously, the base may have a substantially flat shape and a substantially uniform thickness, with a bottom face directly lying on the floor of the premises in which the turntable is situated.

Thanks to the latter configuration, the turntable of the invention may be placed in the premises in which it is designed to operate without requiring any foundation work.

### Brief Description of the Drawings

Further features and advantages of the invention will be more apparent upon reading the detailed description of a preferred, non-exclusive embodiment of a turntable for rotating loads according to the invention, which is described as a non-limiting example with the help of the annexed drawings, in which:
FIG. 1 is a perspective view of a first embodiment of a turntable according to the invention;
FIG. 2 is a top view of a detail of FIG. 1;
FIG. 3 is an enlarged view of a detail of FIG. 2 according to a first embodiment;
FIG. 4 is an axonometric view of the detail of FIG. 3 according to a second embodiment;
FIG. 5 is a perspective view of a second embodiment of a turntable according to the invention;
FIG. 6 is a sectional side view of the turntable of FIG. 5 as taken along the plane *I-I* of FIG. 5;
FIG. 7 is an enlarged view of a detail of FIG. 6;
FIG. 8 is a front view of the turntable of FIG. 5;
FIG. 9 is a top view of the turntable of FIG. 5.

### Detailed description of a preferred embodiment

Referring to the above figures, the turntable for rotating loads according to the invention, generally designated by numeral 1, may be particularly used for handling heavy loads, such as blocks, slabs and more generally products made of stone or cement materials, metal, wood, glass or similar materials.

The turntable 1 may be, for example, placed in a process line for handling a load from the exit of one work station to the entry of the next station, or for interfacing with suitable load handling means.

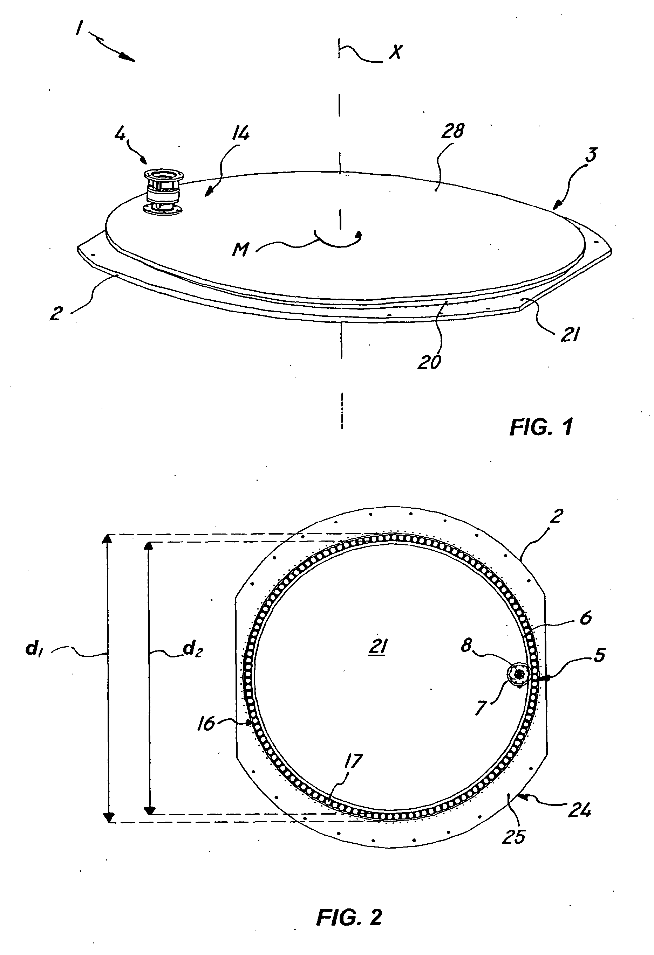

As shown in the particular configuration of FIG. 1, the turntable 1 comprises a stationary base 2 to be anchored to the floor P, and having rotatably mounted thereon a movable plate 3, which is adapted to support a load and to rotate about a substantially vertical axis of rotation X, motor means 4 for imparting a controlled rotary motion about the axis of rotation X to the movable plate 3, drive means 5 interposed between the motor means 4 and the movable plate 3 for imparting a rotation moment M to the latter.

According to the invention, the drive means 5 include a pair of elements 6, 7, one of which is attached to the movable plate 3.

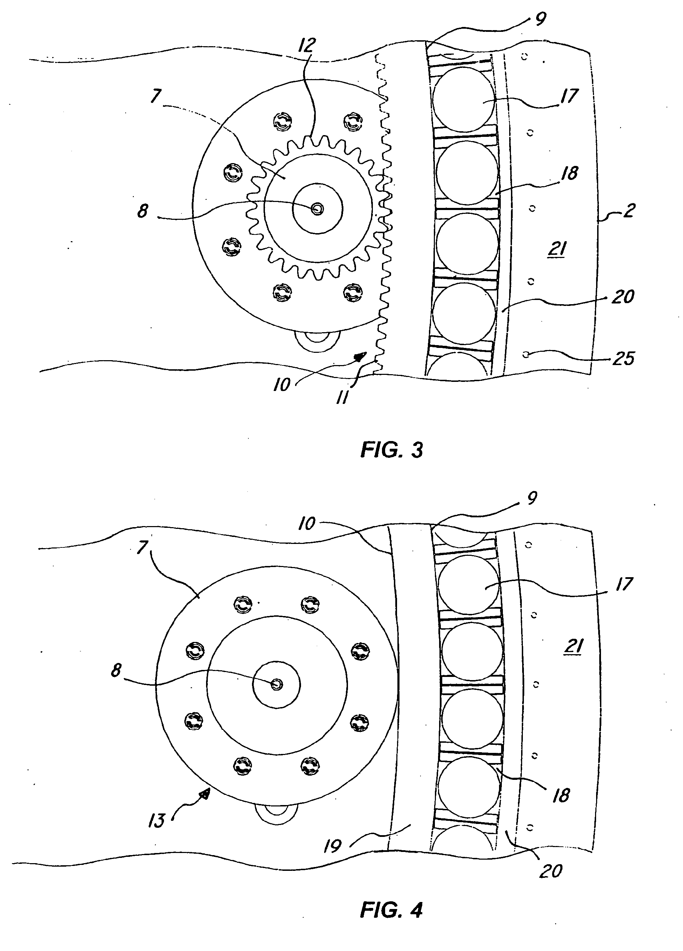

According to the invention, as shown in detail in FIGS. 2 and 3, a first element 6 of the pair is an annular ring, and the second element 7 is a driving wheel keyed to the output shaft 8 of the motor means 4.

Advantageously, the annular ring 6 may have an outer peripheral edge 9 and any inner peripheral edge 10, which are substantially mutually concentric, as clearly shown in FIG. 2.

FIG. 3 shows a first possible configuration of the annular ring 6 and the driving wheel 7, in which the two elements 6, 7 of the pair have respective peripheral toothings 11, 12, which mesh together to form a gear pair.

In this configuration, the ring 6 is toothed at its inner peripheral edge 10 and, as a result, the driving wheel 7 is located inside the ring 6.

In addition to a simple circular or conical shape, the gear pair formed by the ring gear 6 and the gear wheel 7 may also have an ellipsoidal shape, to cause the movable plate 3 to move with a motion composed of rotation about the vertical axis X and rotation about a second vertical axis moving in space, not shown.

In another configuration of the invention, as shown in FIC. 4, the ring 6 and the driving wheel 7 may be substantially smooth, the drive being obtained thanks to an appropriate friction coefficient.

Contact between the two elements 6, 7 of the pair may occur at the facing peripheral edges thereof, designated by numerals 10 and 13 respectively in the particular configuration of FIG. 4, with the driving wheel 7 disposed either outside or inside the angular ring 6.

The driving wheel 7 may be at least partly made of a material selected from synthetic or natural rubbers and polymers.

Furthermore, in the illustrated embodiment, the ring is placed on the stationary base 2, and welded or alternatively fastened thereto by removable anchor means, such as pins, screws or similar devices, not shows.

Advantageously, the motor means 4 include a reducer gearmotor, such as for example an electric, hydraulic, or pneumatic gearmotor, which is mounted on the movable plate 3, preferably but not exclusively on a peripheral portion 14 thereof, so as to be attached thereto.

Thanks to this particular arrangement, the motor means 4 may be easily accessed and facilitate ordinary and extraordinary maintenance.

In operation, the driving wheel 7, rotated by the shaft 8 of the gearmotor 4, interacts with the annular ring 6 and directly transfers motion to the movable plate 3 without any transmission to other members.

Advantageously, to reduce friction between the reciprocally facing surfaces of the turntable, appropriate bearing means 16 of suitable shape and size, may be interposed between the base 2 and the movable plate 3.

As particularly shown in Figures 2 to 4, the bearing means 16 may include a plurality of front rolling elements, generally designated by numeral 17, selected from balls, rollers and plain bearings of any shape.

Advantageously, the bearing means 16 may be confined in a rolling track 18 which is defined by a pair of annular protrusions 19, 20 associated to the base 2 and the movable plate 3 respectively, in such a manner as to be constantly in contact both with the top face 21 of the base 2 and with the bottom face 22 of the movable plate 3.

Preferably, but without limitation, the annular protrusions 19, 20 may be coaxial with the axis of rotation X and have different maximum outer diameters d₁, d₂.

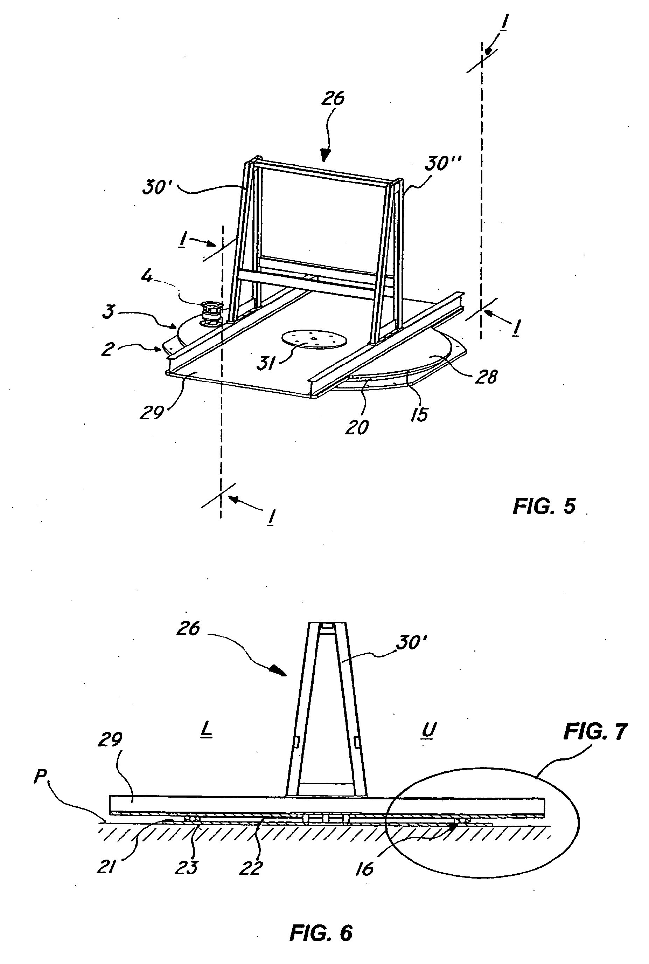

As particularly shown in the sectional view of FIG. 6, one protrusion 20 of the pair may extend downward from the bottom face 22 of the movable plate 3, whereas the other protrusion 19 is defiled by then ring 6 itself, mounted or welded on the top face 21 of the base 2.

Nevertheless, alternative solutions may be envisaged in lieu of the above front rolling elements 17, including for example, hydraulic, oil hydraulic, pneumatic or magnetic means, without departure from the scope of the invention.

In accordance with an alternative embodiment, not shown, the bearing means 16 may include a watertight chamber between the annular protrusions 19, 20.

A fluid of predetermined viscosity, such as a mineral or synthetic oil, may be contained in the chamber, for the movable plate 3 to rotate over the base 2 in reduced friction conditions.

Advantageously, the base 2 and the movable plate 3 may have such respective maximum radial sizes as to suit the specific use of the turntable 1. Thus, no cantilever elements shall be used for load support, and there will be no alignment problems in the passage from a first to a second work station or in the loading and unloading steps using the suitable handling means.

Advantageously, the stationary base 2 has a substantially flat shape and a substantially uniform thickness s, with a bottom face 23 directly lying on the floor P of the premises in which the turntable 1 is situated.

Thus, the turntable 1 may be placed on a substantially flat floor P, or a similar support having the same function, and no foundation has to be provided for receiving it.

The table 1 may be anchored in a removable manner, for easy removal and transfer thereof to other work stations.

The anchor means 24 for securing the base 2 to the floor P may include screws or pins inserted in through holes 25 of the base 2 and to be inserted in further blind holes, aligned with the former and formed in the floor P of the premises in which the turntable 1 is situated.

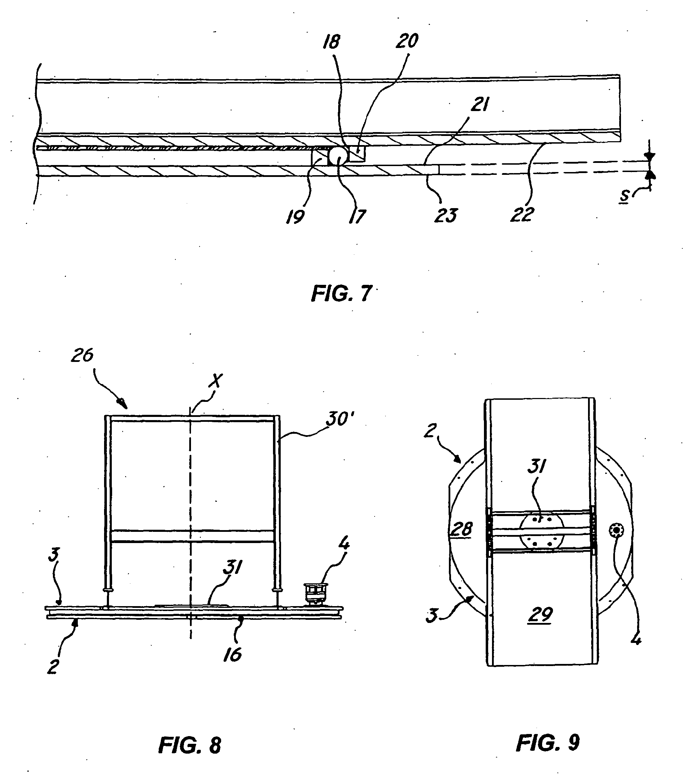

A second embodiment of a turntable 1 of the invention is shown in Figures 5 to 9. In this particular configuration, the movable plate 3 may comprise means 26 for positioning and/or securing the load as it is handled.

These positioning and/or securing means 26 may include a frame formed of metal profiles, which is designed to be removably anchored to the top face 28 of the plate 3. The frame 26 may have a substantially horizontal bottom load supporting wall 29, fixedly or removably attached to the movable plate 3, and a pair of pillars or posts 30', 30" adapted to support the load, e.g. slabs, in a vertically or slightly tilted position.

The two posts 30', 30" define respective load L and unload U stations by their opposite flanks, which stations may be brought, through rotation of the movable plate 3, to alternate communication with the entry and exit areas of two successive work stations of a process line, not shown.

The bottom wall 29 may be welded to the movable plate 3 or formed by a single casting process or even removably mounted to the plate 3 and caused to be attached thereto during rotation by a central connecting flange 31.

The above disclosure clearly shows that the invention fulfills the intended objects and particularly meets the requirement of providing a turntable 1 for loads rotation in which motion transmission is simplified, a smaller number of components being required for moving the load supporting movable plate 3 and reduced space requirements being consequently involved.

Thanks to the particular configuration of the motor means 4, the turntable 1 requires no foundation works for installation, and is compatible with the use of water during operation.

The turntable of the invention is susceptible of a number of changes and variants, within the scope of the invention as defined by the appended claims.

While the turntable has been described with particular reference to the accompanying figures, the numerals referred to in the disclosure and claims are only used for the sake of a better intelligibility of the invention and shall not be intended to limit the claimed scope in any manner.

## Claims

1. A pivoting turntable for loads rotation, comprising:
- a stationary base (2) to be anchored to the floor (P);
- a movable plate (3) designed to support a load and rotatably mounted on said stationary base (2) to rotate about a substantially vertical axis (X);
- motor means (4) for imparting a controlled rotary motion about said axis of notation (X) to said movable plate (3);
- drive means (5) interpose between said motor means (4) and said movable plate (3) for impacting a notation moment (M) to this latter;
therein said drive means (5) include at least one pair of elements (6, 7) one of which is attached to said plate (3);
wherein the first element of said pair is an annular ring (6) and the second element of said pair is a driving wheel (7) keyed to an output shaft (8) of said motor means (4), said motor means including a reducer gearmotor;
**characterized in that** said annular ring (6) is attached to said stationary base (2) and said reducer gearmotor is mounted on said movable plate (3) on the upper side thereof, said driving wheel (7) being located on the bottom side of said movable plate (3) inside said angular ring (6).

2. Turntable as claimed in claim 1, **characterized in that** said annular ring (6) has an outer peripheral edge (9) and an inner peripheral edge (10) which are substantially mutually concentric.

3. Turntable as claimed in claim 2, **characterized in that** said ring (6) and said driving wheel (7) are toothed.

4. Turntable as claimed in claim 3, **characterized in that** said ring (6) is, toothed at is sinner peripheral edge (10).

5. Turntable as claimed in claim 2, **characterized in that** said ring (6) and said driving wheel (7) are substantially smooth and have a high friction coefficient.

6. Turntable as claimed in claim 1, **characterized in that** said reduce gearmotor is of electric, hydraulic, pneumatic or similar type.

7. Turntable as claimed in claim 1, **characterized in that** bearing means (16) are interposed between said base (2) and said movable plate (3), which are deigned to reduce friction between the reciprocally facing surfaced (21, 22) of said base (2) and said plate (3).

8. Turntable as claimed in claim 7, **characterized in that** said bearing means are selected from the group comprising oil hydraulic, hydraulic, pneumatic or magnetic repulsion bearings.

9. Turntable an claimed in claim 7, **characterized in that** said bearing means (16) are confined between annular protrusions (19, 20) associated to said base (2) and said movable plate (3) respectively, said protrusions (19, 20) having different diameters (d₁, d₂) and being coaxial with said axis of rotation (X).

10. Turntable as claimed in claim 9, **characterized in that** said bearing meals (16) are selected from balls, rollers and plain bearings.

11. Turntable as claimed in claim 7, **characterized in that** said bearing means (16) comprise a watertight chamber between said annular protrusions (19, 20) which are designed to contain a fluid of predetermined viscosity, to allow said movable plate (3) to rotate over said base (2) in reduced friction conditions.

12. Turntable as claimed in claim 1, **characterized in that** said base (2) has a substantially flat shape and a substantially uniform thickness (a), and comprise a bottom face (23) directly lying on the floor (P) of the promises in which the turntable (1) is situated.

13. Turntable as claimed in claim 1, **characterized in that** said base (2) has anchor means (24) securing to the floor (P), such an screws or pins inserted in through holes (25) of said base (2) and insertable in blind holes, aligned with said through holes (25) and formed in the floor (P) of the premises in which the turntable (1) is situated.

14. Turntable as claimed in claim 1, **characterized in that** it comprises positioning and/or securing means (26) associated to said movable plate (3), essentially comprising a frame formed of metal sheets and/or profiles, which is designed to be removably anchored to the top face (20) of said plate (3).

## Patentansprüche

1. Schwenkbarer Drehtisch zum Drehen von Lasten mit
- einer festen Basis (2), die am Boden (P) verankert ist,
- einer beweglichen Platte (3), die ausgelegt ist eine Last zu tragen und drehbar auf der festen Basis (2) montiert ist, um um eine im wesentlichen senkrechte Achse (x) zu drehen,
- Motoreinrichtungen (4) um der beweglichen Platte (3) eine gesteuerte Drehbewegung um diese Drehachse (x) aufzuprägen,
- Antriebseinrichtungen (5) zwischen den Motoxeinrichtungen (4) und der beweglichen Platte (3) um dieser letzteren ein Drehmoment (M) aufzuprägen,
- wobei diese Antriebseinrichtungen (5) mindestens ein Paar Elemente (6, 7) beinhalten, von denen eines an der Platte (3) angebracht ist,
- wobei das erste Element von diesem Paar ein ringförmiger Ring (6) ist und das zweite Element von diesem Paar ein Antriebsrad (7) ist, das auf eine Ausgabewelle (8) der Motoreinrichtungen (4) aufgebracht ist, wobei die Motoreinrichtungen (4) einen Reduktionsgetriebemotor enthalten, **dadurch gekennzeichnet, dass** der ringförmige Ring (6) an der festen Basis (2) angebracht ist und der Reduktionsgetriebemotor an der oberen Seite der bewegliche Platte (3) montiert ist, wobei das Antriebsrad (7) an der unteren Seite der bewegliche Platte (3) innerhalb des ringförmigen Rings (6) angeordnet ist.

2. Drehtisch gemäß Anspruch 1, **dadurch gekennzeichnet, dass** der ringförmige Ring (6) einen äußeren Umfangsrand (9) und einen inneren Umfangsrand (10) aufweist, die im wesentlichen gegenseitig konzentrisch sind.

3. Drehtisch gemäß Anspruch 2, **dadurch gekennzeichnet, dass** der Ring (6) und das Antriebsrad (7) mit Zähnen versehen sind.

4. Drehtisch gemäß Anspruch 3, **dadurch gekennzeichnet, dass** der Ring (6) an seinem inneren Umfangsrand (10) mit Zähnen versehen ist.

5. Drehtisch gemäß Anspruch 2, **dadurch gekennzeichnet, dass** der Ring (6) und das Antriebsrad (7) im wesentlichen glatt sind und einen hohen Reibungskoeffizienten aufweisen.

6. Drehtisch gemäß Anspruch 1, **dadurch gekennzeichnet, dass** der Reduktionsgetriebemotor vom elektrischen, hydraulischen, pneumatischen oder ähnlichen Typ ist.

7. Drehtisch gemäß Anspruch 1, **dadurch gekennzeichnet, dass** Lagereinrichtungen (16) zwischen der Basis (2) und der beweglichen Platte (3) vorgesehen sind, die ausgelegt sind, um die Reibung zu reduzieren zwischen den sich umgekehrt gegenüberliegenden Flächen (21, 22) der Basis (2) und beweglichen Platte (3).

8. Drehtisch gemäß Anspruch 7, **dadurch gekennzeichnet, dass** die Lagereinrichtungen ausgewählt sind aus der Gruppe der ölhydraulisch, hydraulisch, pneumatisch oder magnetisch wirkenden Lager.

9. Drehtisch gemäß Anspruch 7, **dadurch gekennzeichnet, dass** die Lagereinrichtungen (16) eingegrenzt sind zwischen ringförmigen Vorsprüngen (19, 20), die jeweils der Basis (2) und der beweglichen Platte (3) zugeordnet sind, wobei die Vorsprünge (19, 20) jeweils unterschiedliche Durchmesser (d₁, d₂) aufweisen und koaxial zu der Drehachse (X) sind.

10. Drehtisch gemäß Anspruch 9, **dadurch gekennzeichnet, dass** die Lagereinrichtungen (16) ausgewählt sind aus Kugel-, Rollen- und Gleitlagern.

11. Drehtisch gemäß Anspruch 7, **dadurch gekennzeichnet, dass** die Lagereinrichtungen (16) eine wasserdichte Kammer aufweisen zwischen den ringförmigen Vorsprüngen (19, 20), die ausgelegt ist, um eine Flüssigkeit mit vorbestimmter Viskosität zu enthalten, um es der beweglichen Platte (3) zu erlauben über der Basis (2) bei reduzierten Reibungsbedingungen zu rotieren.

12. Drehtisch gemäß Anspruch 1, **dadurch gekennzeichnet, dass** die Basis (2) eine im wesentlichen flache Form und eine im wesentlichen gleichförmige Dicke (s) und eine untere Fläche (23) aufweist, die direkt auf dem Boden (P) der Einrichtungen aufliegt, in denen der Drehtisch (1) angeordnet ist.

13. Drehtisch gemäß Anspruch 1, **dadurch gekennzeichnet, dass** die Basis (2) Verankerungseinrichtungen (24) aufweist zum verankern am Boden (P) so wie Schrauben und Stifte, die durch Durchgangsöffnungen (25) der Basis (2) eingefügt sind und einsetzbar in Sacklöcher sind, die ausgerichtet sind zu den Durchgangsöffnungen (25), die in dem Boden (P) der Einrichtungen gebildet sind, in denen der Drehtisch (1) angeordnet ist.

14. Drehtisch gemäß Anspruch 1, **dadurch gekennzeichnet, dass** Positionier- und Sicherungseinrichtungen (26) vorgesehen sind, die der beweglichen Platte (3) zugeordnet sind, die im wesentlichen einen Rahmen aufweisen, der aus Metallblättern und/oder Profilen gebildet ist, der ausgelegt ist, um lösbar verankert zu werden an der Oberseite (28) der Platte (3).

## Revendications

1. Table tournante pivotante pour la rotation de charges, comprenant:
- une base fixe (2) destinée à être ancrée au sol (P) :
- un plateau mobile (3) conçu pour supporter une charge et monté rotatif sur ladite base fixe (2) pour tourner autour d'un axe sensiblement vertical (X) ;
- des moyens moteurs (4) destinés à imprimer audit plateau mobile (3) un mouvement rotatif commandé autour dudit axe de rotation (X) ;
- des moyens d'entraînement (5) interposés entre lesdits moyens moteurs et ledit plateau mobile (3) pour imprimer un couple de rotation (M) à ce dernier;
dans laquelle lesdits moyens d'entraînement (5) comprennent au moins une paire d'éléments (6, 7) dont un est attaché audit plateau (3),
dans laquelle le premier élément de ladite paire est une couronne annulaire (6) et le deuxième élément de ladite paire est une roue d'entraînement (7) clavetée à un arbre de sortie (8) desdits moyens monteurs (4), lesdits moyens moteurs comprenant un moteur à engrenages réducteur ;
**caractérisée en ce que** ladite couronne annulaire (6) est attachée à ladite base fixe (2) et ledit moteur à engrenages réducteur est monté sur ledit plateau mobile (3) sur le côté supérieur de ce dernier, ladite roue d'entraînement (7) étant située sur le côté inférieur dudit plateau mobile (3) à l'intérieur de ladite couronne annulaire (6).

2. Table tournante selon la revendication 1, **caractérisée en ce que** ladite couronne annulaire (6) a un bord périphérique extérieur (9) et un bord périphérique intérieur (10) qui sont sensiblement mutuellement concentriques.

3. Table tournante selon la revendication 2, **caractérisée en ce que** ladite couronne (6) et ladite roue d'entraînement (7) sont dentées.

4. Table tournante selon la revendication 3, **caractérisée en ce que** ladite couronne (6) est dentée sur son bord périphérique intérieur (10).

5. Table tournante selon la revendication 2, **caractérisée en ce que** ladite couronne (6) et ladite roue d'entraînement (7) sont sensiblement lisses et ont un haut coefficient de frottement.

6. Table tournante selon la revendication 1, **caractérisée en ce que** ledit moteur à engrenages réducteur est de type électrique, hydraulique, pneumatique ou analogue.

7. Table tournante selon la revendication 1, **caractérisée en ce que** des moyens de portée (16) sont interposés entre ladite base (2) et ledit plateau mobile (3), lesquels moyens sont conçus pour réduire le frottement entre les surfaces mutuellement opposées face à face (21, 22) de ladite base (2) et dudit plateau (3).

8. Table tournante selon la revendication 7, **caractérisée en ce que** lesdits moyens de portée sont choisis dans le groupe comprenant des moyens oléohydrauliques, hydrauliques, pneumatiques ou à répulsion magnétique.

9. Table tournante selon la revendication 7, **caractérisée en ce que** lesdits moyens de portée (16) sont confinés entre des protubérances annulaires (19, 20) respectivement associées à ladite base (2) et audit plateau mobile (3), lesdites protubérances (19, 20) ayant des diamètres différents (d₁, d₂) et étant coaxiales audit axe de rotation (x).

10. Table tournante selon la revendication 9, **caractérisée en ce que** lesdits moyens de portée (16) sont choisis parmi les billes, les rouleaux et les portées lisses,

11. Table tournante selon la revendication 7, **caractérisée en ce que** lesdits moyens de portée (16) comprennent une chambre étanche à l'eau entre lesdites protubérances annulaires (19, 20), lesquelles sont conçues pour contenir un fluide de viscosité prédéterminée, pour permettre audit plateau mobile (3) de tourner au-dessus de ladite base (2) dans des conditions de frottement réduites.

12. Table tournante selon la revendication 1, **caractérisée en ce que** ladite base (2) a une forme sensiblement plate et une épaisseur (a) sensiblement uniforme, et comprend une face intérieure (23) qui repose directement sur le sol (P) des locaux dans lesquels la table tournante (1) est située.

13. Table tournante selon la revendication 1, **caractérisée en ce que** ladite base (2) a des moyens d'ancrage (24) qui fixent audit sol (P), tels que des vis ou des chevilles insérées dans des trous débouchants (25) de ladite base (2) et qui peuvent être insérés dans des trous borgnes alignés avec lesdits trous débouchants (25) et formés dans le sol (P) des locaux dans lesquels la table tournante (1) est située.

14. Table tournante selon la revendication 1, **caractérisée en ce qu'**elle comprend des moyens de positionnement et/ou de fixation (26) associés audit plateau mobile (3), comprenant essentiellement un bâti formé de tôles et/ou profilés métalliques, qui est conçu pour être ancré de façon amovible à la face supérieure (28) dudit plateau (3).
